# FASCICULE DE BREVET EUROPEEN

(11) **EP 1 906 511 B1**
(45) Date de publication et mention de la délivrance du brevet: **24.06.2009**
(21) Numéro de dépôt: 07123522.0
(22) Date de dépôt: 29.10.1999
(51) Int. Cl.: H02K 5/24, H02K 9/06, H02K 15/085, H02K 3/12

(54) **Machine électrique tournante à bruit aéraulique réduit, notamment alternateur de véhicule automobile, et procédé de fabrication de son stator**
Elektrisch umlaufende Maschine mit reduzierter Luftschallemission, insbesondere Lichtmaschine eines Kraftfahrzeugs, und Herstellungsverfahren ihres Stators
Rotating electrical machine with reduced aeraulic noise, in particular an automobile alternator, and method of manufacturing its stator

(30) Priorité: 29.10.1998 FR 9813721
(43) Date de publication de la demande: 02.04.2008
(62) Demande divisionnaire de: 99402705.0
(73) Titulaire: VALEO EQUIPEMENTS ELECTRIQUES MOTEUR, 94046 Créteil (FR)
(72) Inventeur: Grand, Pierrick, 77420, CHAMPS SUR MARNE (FR); Couvert, Pascal, 94700, MAISONS ALFORT (FR)
(74) Mandataire: Tran, Chi-Hai

(56) Documents cités:
- FR-A- 2 734 960

## Description

La présente invention concerne d'une façon générale les machines tournantes, et en particulier les alternateurs de véhicules automobiles.

Alors que pendant de nombreuses années la conception des alternateurs avait pour objectif de réaliser des machines ayant un bon rendement pour un poids et un encombrement limité, et susceptibles de tourner à des vitesses de rotation élevées, on se préoccupait relativement peu du bruit que ces alternateurs engendraient, qui était relativement faible par rapport à celui du moteur à combustion du véhicule, situé à son voisinage.

Or on tend de nos jours à réduire les sources de bruit dans un véhicule automobile, y compris au niveau de l'alternateur, sachant que le bruit cumulé s'en trouvera, même si c'est à un degré limité, également réduit.

On connait par la demande de brevet FR 2734960 un moteur électrique pour volet roulant avec des chignons d'enroulement de stator maintenus grâce à des coiffes.

La présente invention consiste en une nouvelle démarche, particulièrement simple et économique à mettre en oeuvre au cours du processus de fabrication d'une machine telle qu'un alternateur (ou encore un alterno-démarreur), qui permette de réduire de façon sensible le bruit d'origine aéraulique lors de la rotation de la machine, en jouant en particulier sur certaines composantes harmoniques de ce bruit.

Un objet secondaire de la présente invention est, par cette même démarche, de faciliter dans certains cas le positionnement du stator dans l'ensemble formé par les paliers avant et arrière.

Ainsi la présente invention propose selon un premier aspect une machine électrique tournante, en particulier un alternateur de véhicule automobile selon la revendication 1,

Avantageusement, les chignons situés d'un côté opposé au côté d'entraînement (côté dit arrière, opposé à la poulie) de l'arbre de rotor débordent davantage que les chignons situés du côté d'entraînement.

En outre, la différence entre les étendues axiales sur lesquelles les chignons débordent d'un côté et de l'autre de la carcasse de stator est préférentiellement comprise entre environ 4 et environ 8 mm.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue en coupe axiale d'un alternateur de véhicule automobile réalisé selon l'invention, et
la figure 2 est un graphique illustrant l'amélioration réalisée par la présente invention en termes de niveau de bruit aéraulique en fonction de la vitesse de rotation.

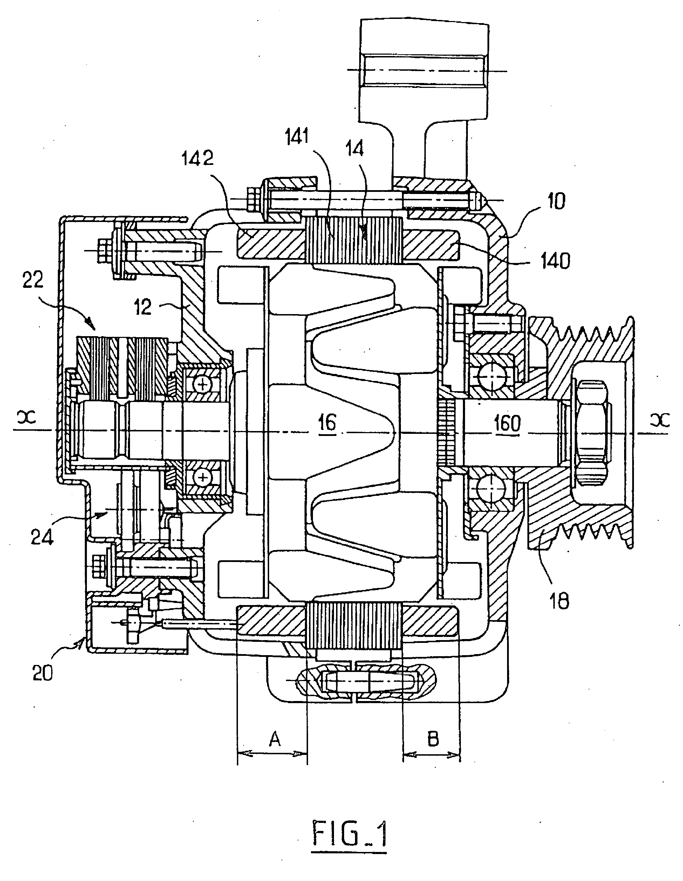

En référence tout d'abord à la figure 1, on a représenté un alternateur de véhicule automobile qui comprend, de façon classique en soi, un palier avant 10 et un palier arrière 12 assemblés en emprisonnant la carcasse 141 d'un stator 14, et recevant un rotor 16 monté sur un arbre de rotor 160 lui-même monté dans les paliers avant et arrière par l'intermédiaire de roulements à billes pour tourner autour d'un axe x-x. L'arbre de rotor 160 porte à son extrémité avant une poulie 18 pour l'entraînement en rotation de l'alternateur.

Du côté arrière, l'alternateur comporte un capot 20 abritant différents organes tel qu'un ensemble porte-balais 22 et un pont redresseur globalement désigné par la référence 24.

La carcasse 141 du stator, réalisée de façon classique par empilage de tôles, possède une pluralité d'encoches (non visibles) dans lesquels les bobinages de stator sont enroulés. De façon classique, ces bobinages forment de part et d'autre de la carcasse en direction axiale deux chignons, à savoir un chignon avant 140 et un chignon arrière 142.

On a constaté que lorsque ces chignons adoptaient des géométries non symétriques par rapport au plan transversal médian de la carcasse de stator 141, alors l'émission de bruit globale, d'origine aérodynamique, de l'alternateur s'en trouvait réduite dans des proportions notables. Après analyse de ce phénomène, on a constaté que cette dissymétrie des chignons 140, 142 provoquait une diminution sensible de la composante de bruit correspondant à l'harmonique de rang 12. Ceci corrobore parfaitement le fait que le bruit global peut être diminué de façon particulièrement sensible pour l'oreille humaine si l'on diminue les composantes harmoniques de rang faible à moyen (le rang 12 étant considéré comme rang moyen).

Selon un mode de réalisation préféré de l'invention, cette dissymétrie des chignons est réalisée en bobinant les enroulements de stator de la façon usuelle pour réaliser une structure de bobinages relativement compacte et rigide, mais avec un certain jeu axial par rapport à la carcasse, et en exerçant ensuite un effort de déplacement sur les chignons situés d'un côté, et donc sur l'ensemble de la structure de bobinages, y compris les chignons opposés dans une direction parallèle à l'axe de rotation de l'alternateur de manière à ce que les chignons situés dudit côté opposé, en l'espèce les chignons arrière 142, débordent davantage par rapport à la face latérale arrière de la carcasse que les chignons avant 140 par rapport à sa face latérale avant. Ainsi la figure 1 montre qu'après ce déplacement, l'étendue des chignons arrière 142 par rapport à la face arrière de la carcasse 141 (distance A) est supérieure à l'étendue (distance B) des chignons avant du côté opposé.

Concrètement, on commence à obtenir des résultats significatifs en termes de réduction du bruit lorsque la différence entre les distances A et B atteint environ 4 mm, une réduction de bruit particulièrement notable étant obtenue lorsque cette différence est de 8 mm ou davantage. Ceci correspond à un déplacement effectif de la structure de bobinages sur une distance comprise entre 2 et 4 mm.

On peut également obtenir des résultats intéressants si l'on déplace la structure de bobinages dans le sens opposé, c'est-à-dire vers le côté avant (coté poulie) de la machine.

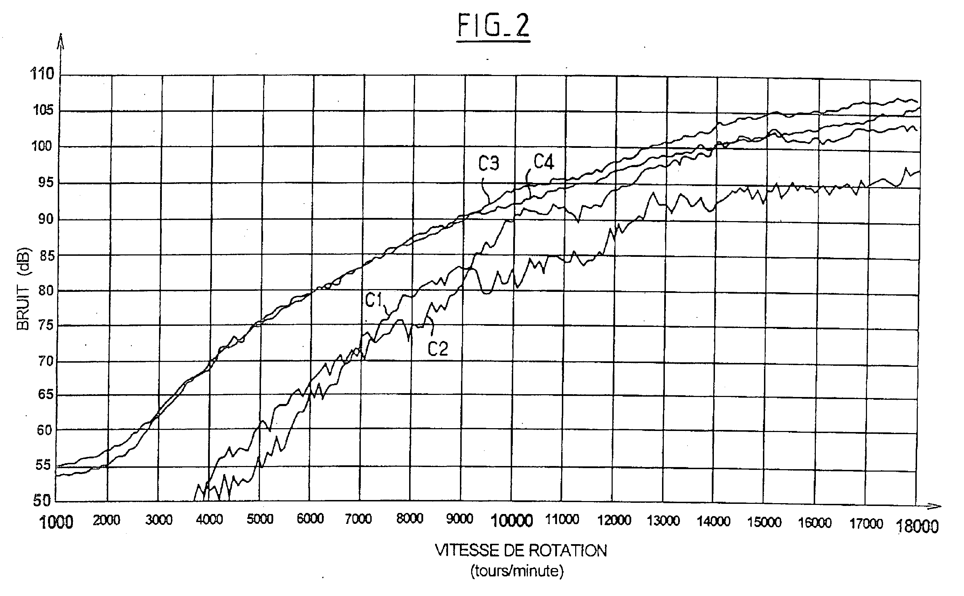

La figure 2 illustre, par un ensemble de courbes de bruit (exprimé en dB) en fonction de la vitesse de rotation de l'alternateur (exprimée en tours/minute), les performances en matière de réduction de bruit obtenues grâce à la présente invention.

Ainsi la courbe C1 illustre l'évolution de la composante harmonique de rang 12 du bruit avec un stator conventionnel, à chignons symétriques, tandis que la courbe C2 illustre l'évolution de la même composante harmonique avec un stator dont les chignons de bobinages ont la disposition illustrée sur la figure 1, avec A-B=4 mm.

On observe une diminution du bruit au niveau de cet harmonique qui est significative sur toute la plage de vitesses de rotation de l'alternateur, en atteignant de 5 à 8 dB pour les vitesses de rotation élevées.

Le niveau de bruit global avec un stator conventionnel est illustré par la courbe C3, tandis que le niveau de bruit global avec le stator de la figure 1 est illustré par la courbe C4.

On observe une diminution de ce bruit global qui peut atteindre 2 à 3 dB pour les vitesses de rotation élevées.

Ainsi, par des moyens particulièrement simples et économiques à mettre en oeuvre, et sans la moindre pièce additionnelle, on réalise une diminution substantielle du niveau de bruit de l'alternateur.

On notera également que, dans certains cas, le déplacement de la structure de bobinages de stator selon l'invention peut être mise à profit pour faciliter le positionnement du stator dans la machine.

## Revendications

1. Machine électrique tournante, en particulier alternateur de véhicule automobile, comprenant un rotor (16) monté sur un arbre de rotor (160) tournant autour d'un axe (x-x) et un stator (14), le stator comportant une carcasse (141) recevant des enroulements de stator qui définissent deux ensembles de chignons (140, 142) débordant respectivement au-delà de deux faces d'extrémités axiales de la carcasse, **caractérisée en ce que** l'un (142) des ensembles de chignons déborde davantage en direction axiale par rapport à la face d'extrémité correspondante que l'autre ensemble de chignons (140) par rapport à l'autre face d'extrémité, de manière à diminuer le bruit de fonctionnement d'origine aéraulique, la différence entre les étendues axiales (A, B) sur lesquelles les chignons débordent d'un côté et de l'autre de la carcasse de stator est supérieure à 4 mm.

2. Machine selon la revendication précédente, **caractérisée par le fait que** la différence entre les étendues axiales (A, B) sur lesquelles les chignons débordent d'un côté et de l'autre de la carcasse de stator est comprise entre 4 mm et 8 mm.

3. Machine selon l'une des revendications précédentes, **caractérisée par le fait que** les chignons (142) situés d'un côté opposé au côté d'entraînement de l'arbre de rotor (160) débordent davantage que les chignons (140) situés du côté d'entraînement.

## Claims

1. Rotary electrical machine, in particular a motor vehicle alternator, comprising a rotor (16) which is fitted on a rotor shaft (160) which rotates around an axis (x-x), and a stator (14), the stator comprising a frame (141) which accommodates stator windings which define two sets of chitons (140, 142) which project respectively beyond two axial end surfaces of the frame, **characterised in that** one (142) of the sets of chignons projects further in the axial direction relative to the corresponding end surface, than the other set of chignons (140) does relative to the other end surface, such as to decrease the functioning noise of aeraulic origin, and the difference between the axial extents (A, B) to which the chignons project on both sides of the stator frame is greater than 4 mm.

2. Machine according to the preceding claim, **characterised in that** the difference between the axial extents (A, B) to which the chignons project on both sides of the stator frame is between 4 mm and 8 mm.

3. Machine according to one of the preceding claims, **characterised in that** the chignons (142) which are situated on a side opposite the drive side of the rotor shaft (160) project further than the chignons (140) which are situated on the drive side.

## Patentansprüche

1. Rotierende elektrische Maschine, insbesondere Wechselstromgenerator für Kraftfahrzeuge, mit einem Rotor (16), der auf einer um eine Achse (x-x) rotierenden Rotorwell (160) gelagert ist, und einem Stator (14), wobei der Stator ein Gehäuse (141) umfasst das Statorwicklungen stimmt, die zwei Splulenkopfgruppen (140, 142) definieren, die über zwei axiale Abschlussflächen des Gehäuses hinaus überstehen, **dadurch gekennzeichnet, dass** eine (142) der Spulenkopfgruppen im Verhältnis zu der entsprechenden Abschlussfläche in axialer Richtung weiter Übersteht als die andere Spulenkopfgruppe (140) im Verhältnis zu der anderen Abschlussfläche, um die durch die Luffschallemission bedingten Betriebsgeräusche zu verringern, wobei der Unterschied zwischen den axialen Ausdehnungen (A, B), um welche die Spulenköpfe auf der einen und der anderen Seite des Statorgehäuses überstehen, größer als 4 mm ist.

2. Maschine nach dem vorangehenden Anspruch, **dadurch gekennzeichnet, dass** der Unterschild zwischen den axialen Ausdehnungen (A, B), um welche die Spulenköpfe auf der einen und der anderen Seite des Statorgehäuses überstehen, zwischen 4 mm und 8 mm liegt.

3. Maschine nach einem der vorangehenden Ansprüche, **dadurch gekennzeichnet, dass** die Spulenknöpfe (142), die sich auf einer Seite befinden, die der Antriebsseite der Rotorwelle (160) gegenüberliegt, weiter überstehen als die Spulenköpfe (140), die sich auf der Antriebsseite befinden.
